# EUROPÄISCHE PATENTSCHRIFT

(11) **EP 2 512 888 B1**
(45) Veröffentlichungstag und Bekanntmachung des Hinweises auf die Patenterteilung: **13.09.2017**
(21) Anmeldenummer: 10796360.5
(22) Anmeldetag: 15.12.2010
(51) Int. Cl.: B60T 11/16, B60T 11/232

(54) **HAUPTZYLINDER FÜR EIN GEREGELTES BREMSSYSTEM**
MASTER CYLINDER FOR A REGULATED BRAKING SYSTEM
MAÎTRE-CYLINDRE POUR UN SYSTÈME DE FREINAGE COMMANDÉ

(30) Priorität: 15.12.2009 DE 102009054695
(43) Veröffentlichungstag der Anmeldung: 24.10.2012
(73) Patentinhaber: Continental Teves AG & Co. oHG, 60488 Frankfurt (DE)
(72) Erfinder: KÖNIG, Harald, 61239 Ober-Mörlen (DE); BISCHOFF, Adreas, 61118 Bad Vilbel (DE); DROTT, Peter, 65936 Frankfurt (DE); INABA, Makato, 224-0029 (JP); KREH, Heinrich, 61197 Florstadt (DE); JANOSEK, Filip, 50401 Novy Bydzov (CZ); JUNGMANN, Udo, 64546 Mörfelden (DE)
(86) Internationale Anmeldenummer: PCT/EP2010/069729
(87) Internationale Veröffentlichungsnummer: WO 2011/082999

(56) Entgegenhaltungen:
- EP-A1- 1 889 767
- WO-A1-2005/066005
- DE-A1-102009 004 717
- KR-A- 20080 086 654

## Beschreibung

Die Erfindung betrifft einen Hauptzylinder für ein geregeltes Bremssystem mit wenigstens einem, in einem Gehäuse verschiebbaren Kolben, der mittels eines, in einer Ringnut des Gehäuses angeordneten Dichtelementes gegenüber einem Druckraum abgedichtet ist, welcher durch im Kolben ausgebildete Steuerdurchlässe mit einem drucklosen Nachlaufraum verbindbar ist. Derartige Hauptzylinder sind beispielsweise aus der WO 2005/066005 A1 und aus der DE 10 2004 057 137 A1 bekannt, wobei die Steuerdurchlässe als radiale Querbohrungen mit kleinem Querschnitt vorgesehen sind und auf einer Innenseite im Bereich der Querbohrungen eine umlaufende Innennut ausgebildet ist, um den Leerweg des Hauptzylinders möglichst klein zu halten und gleichzeitig den Drosselwiderstand durch Reduzieren der Länge der Querbohrungen zu verringern.

Bei der Verwendung in einem geregelten Bremssystem, wie beispielsweise ein Bremssystem mit Antriebsschlupfregelung (ASR) oder Elektronischem-Stabilitäts-Programm (ESP), wird im Falle eines Regeleingriffes von einer Pumpe Druckmittel von einem Druckmittelbehälter über den Hauptzylinder nachgesaugt. Nachteilig hierbei ist, dass der kleine Querschnitt der Querbohrungen einen zu großen Durchflusswiderstand erzeugt und das benötigte Druckmittel der Pumpe nicht schnell genug bereitgestellt werden kann. stand erzeugt und das benötigte Druckmittel der Pumpe nicht schnell genug bereitgestellt werden kann.

Um den Durchflusswiderstand zu verringern, besteht bei den bekannten Hauptzylindern die Möglichkeit, eine größere Anzahl von Querbohrungen vorzusehen oder die Querbohrungen hinsichtlich ihres Durchmessers zu optimieren. Als nachteilig bei der erstgenannten Lösung stellt sich jedoch heraus, dass der Durchflusswiderstand zugunsten der Stabilität des Kolbens verringert wird und ferner das Vorsehen von vielen kleinen Querbohrungen wirtschaftlich ungünstig ist. Die zweite Lösung hat den Nachteil, dass sich durch Verschieben der steuernden Bohrungsseitenkante der Leerweg (Schließweg) des Hauptzylinders vergrößert.

Der Erfindung liegt daher die Aufgabe zugrunde, einen in Hinblick auf die genannten Nachteile des bekannten Hauptzylinders verbesserten Hauptzylinder bereitzustellen.

Erfindungsgemäß wird die Aufgabe dadurch gelöst, dass die Steuerdurchlässe von wenigstens einem der Kolben eine parallel zu einer Kolbenstirnseite ausgebildete Steuerkante aufweisen und der Kolben aus Kunststoff ausgebildet ist, wodurch der Kolben, einfach und kostengünstig herstellbar, es ermöglicht, bei gleichem Schließweg den Durchflussquerschnitt der Steuerdurchlässe zu vergrößern, so dass das Dynamikverhalten bei Regeleingriffen verbessert werden kann.

Vorzugsweise sind die Steuerdurchlässe als axiale Nuten an einer Außenseite des Kolbens vorgesehen. Die axialen Nuten bieten den Vorteil, dass eine definierte Führung des Dichtelements auf der Außenseite des Kolbens gewährleistet ist.

Eine große Kontaktfläche des Kolbens zum Dichtelement bzw. zu dessen Innendichtlippe und gleichzeitig ein großer Nutquerschnitt kann dadurch erzielt werden, indem die axialen Nuten schwalbenschwanzförmig vorgesehen sind.

Eine alternative Ausführungsform der Erfindung sieht dagegen vor, dass die Steuerdurchlässe als radiale Durchbrüche des Kolbens vorgesehen sind. Auch hierbei ist die Führung des Dichtelementes auf dem Kolben gegeben.

Die Parallelität kann in einfacher Weise hergestellt werden, indem die Steuerdurchlässe durch Stanzen in dem Kolben vorgesehen sind.

Eine weitere vorteilhafte Ausführungsform sieht vor, dass der Kolben mittels eines Fliesspressverfahrens hergestellt ist.
Vorzugsweise ist der Kolben topfförmig mit einem Boden ausgebildet und auf einer Innenseite des Bodens ist ein erstes mittig angeordnetes Fixierelement für eine Rückstellfeder des Kolbens vorgesehen.

Weist der Hauptzylinder eine Sensoranordnung zur Überwachung von Position und Bewegung eines Kolbens auf, ist gemäß einer vorteilhaften Ausführungsform auf einer Außenseite des Bodens ein zweites mittig angeordnetes Fixierelement für ein Magnetführungselement vorgesehen.

Weitere Merkmale, Vorteile und Anwendungsmöglichkeiten der Erfindung gehen aus den Unteransprüchen und der nachfolgenden Beschreibung von Ausführungsbeispielen sowie anhand der Zeichnung hervor.

Es zeigt jeweils stark schematisiert:
- Figur 1: einen erfindungsgemäßen Hauptzylinder eines ersten Ausführungsbeispiels mit einem ersten und einem zweiten Kolben im Längsschnitt;
- Figur 2: eine Teilansicht des zweiten Kolbens gemäß Fig. 1 in räumlicher Darstellung;
- Figur 3: eine weitere Teilansicht des zweiten Kolbens gemäß Fig. 1 in räumlicher Darstellung teilweise geschnitten;
- Figur 4: eine weitere Teilansicht des zweiten Kolbens gemäß Fig. 1 in räumlicher Darstellung;
- Figur 5: einen erfindungsgemäßen Hauptzylinder eines zweiten Ausführungsbeispiels mit einem ersten und einem zweiten Kolben im Längsschnitt;
- Figur 6: einen Kolben eines dritten Ausführungsbeispiels in räumlicher Darstellung und
- Figur 7: eine vergrößerter Ausschnitt des Kolbens gemäß Fig. 6.

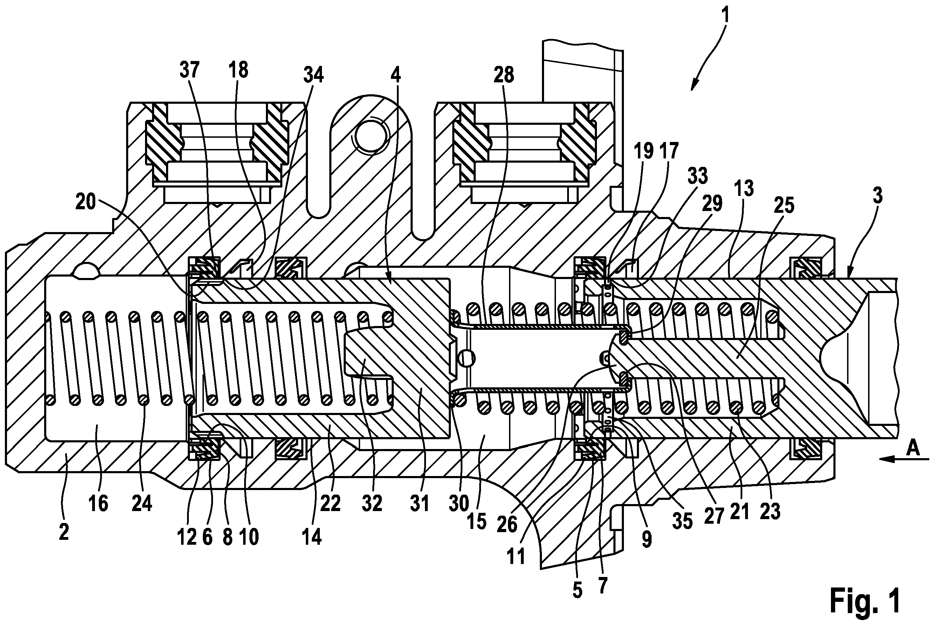

Fig. 1 zeigt im Längsschnitt einen erfindungsgemäßen Hauptzylinder 1 eines ersten Ausführungsbeispiels, welcher beispielsweise in einem geregelten Bremssystem mit Antischlupfregelung (ASR) und/oder Elektronischem-Stabilitäts-Programm (ESP) Verwendung findet und in Plunger- und Tandembauweise ausgebildet ist.

Der Hauptzylinder 1 umfasst einen ersten und einen zweiten, in einem Gehäuse 2 verschiebbaren Kolben 3,4, wobei in einer Ringnut 5,6 des Gehäuses 2 ein kreisringförmiges Dichtelement 7,8 mit einer dynamisch beaufschlagten Innendichtlippe 9,10 sowie mit einer statisch beaufschlagten Außendichtlippe 11,12 vorgesehen ist. Die dynamisch beaufschlagte Innendichtlippe 9,10 liegt mit einer ersten Dichtfläche an dem Kolben 3,4 an und die statisch beaufschlagte Außendichtlippe 11,12 liegt mit einer zweiten Dichtfläche an einem Boden der Ringnut 5,6 an. Eine Außenseite 13,14 der Kolben 3,4 dient als Führungsfläche.

Ein erster und ein zweiter Druckraum 15,16 sind in einem, in Fig. 1 dargestellten, unbetätigten Zustand des Hauptzylinders 1 über einen nicht gezeigten Druckmittelkanal und einen Nachlaufraum 17,18 im Gehäuse 2 sowie über Steuerdurchlässe 19,20 in einer topfförmigen Wandung 21,22 des ersten und des zweiten Kolbens 3,4 mit einem nicht dargestellten, drucklosen Druckmittelbehälter verbunden. Die Kolben 3,4 sind dabei mittels Rückstellfedern 23,24 vorgespannt.

Die Rückstellfeder 23,24 ist jeweils zumindest teilweise innerhalb der topfförmigen Wandung 21,22 angeordnet. Wie aus Fig. 1 ersichtlich ist, wird die Wandung 21 des ersten Kolbens 3 mittig von einem zentrischen Zapfen 25 durchragt, der vor seinem axialen Austritt aus der Wandung 21 endet. Dieses Ende 26 ist mit einem Anschlag 27 für eine Hülse 28 versehen, der mit einem Kragen 29 derart zusammenwirkt, dass die Hülse 28 relativ zu dem Zapfen 25 begrenzt teleskopierbar ist. Mit anderen Worten wird die Hülse 28 mit der Rückstellfeder 23 bei Betätigung in das Kolbeninnere gedrängt. Wie zu ersehen ist, handelt es sich bei dem Anschlag 27 vorzugsweise um eine, an den Zapfen 25 angenietete - insbesondere Taumelvernietete - Ringscheibe. Das anderseitige Ende der Hülse 28 verfügt über den tellerartigen Kragen 29 zur Anlage der Rückstellfeder 23.

Der zweite Kolben 4 weist an seinem Boden 31 ein erstes Fixierelement 32 auf, welches sich zur Fixierung und Positionierung der Rückstellfeder 24 von einer Innenseite des Bodens 31 mittig innerhalb der Wandung 22 erstreckt.

Zur Betätigung des Hauptzylinders 1 wird der erste Kolben 3 in Betätigungsrichtung A verschoben. Dabei wird die Bewegung des ersten Kolbens 3 über die Rückstellfeder 23 auf den zweiten Kolben 4 übertragen. Sobald sich die Steuerdurchlässe 19,20 mit ihren noch im Nachfolgenden näher beschriebenen Steuerkanten 33,34 im Bereich der Dichtelemente 7,8 befinden, also die Steuerkanten 33,34 überfahren sind, ist der sogenannte Leerweg (Schließweg) des Hauptzylinders 1 durchfahren, da kein Druckmittel mehr von den Nachlaufräumen 17,18 durch die Steuerdurchlässe 19,20 in die Druckräume 15,16 gelangen kann. Die Verbindung der Druckräume 15,16 mit dem Druckmittelbehälter ist unterbrochen und in den Druckräumen 15,16 wird Druck aufgebaut.

Bei einem ASR- oder ESP-Eingriff kann es notwendig sein, bei unbetätigten oder betätigten Kolben 3,4 Druckmittel aus dem Druckmittelbehälter über die bzw. den Druckraum 15,16 in Richtung Radbremsen nachzusaugen, was vorzugsweise mittels einer Pumpe erfolgt, deren Eingang wahlweise mit den Druckräumen 15,16 des Hauptzylinders 1 oder mit den Radbremsen verbindbar ist, um in Richtung Radbremsen oder in Richtung Hauptzylinder 1 zu fördern (Rückförderprinzip). Hierzu wird bei einem ASR oder ESP-Eingriff in unbetätigtem Zustand des Hauptzylinders 1 das Druckmittel aus dem Druckmittelbehälter über die Druckmittelkanäle, die Nachlaufräume 17,18, die Steuerdurchlässe 19,20 und die Druckräume 15,16 nachgesaugt. Bei einem ESP-Eingriff in betätigtem Zustand des Hauptzylinders 1 erfolgt die Nachsaugung zusätzlich durch Überströmen der Außendichtlippen 11,12 der Dichtelemente 7,8, indem diese durch den Saugdruck in Richtung Innendichtlippen 9,10 umklappt und hierdurch die Dichtfläche der Außendichtlippe 11,12 nicht mehr am Boden der Ringnut 5,6 anliegt. Um der Pumpe bei einem ASR- oder ESP-Eingriff insbesondere in unbetätigter Stellung des Hauptzylinders 1 schnell genügend Druckmittel zur Verfügung zu stellen, ist es notwendig, den Durchflusswiderstand der Steuerdurchlässe 19,20 so gering wie möglich zu halten, wobei jedoch auch der Leerweg des Hauptzylinders 1 möglichst klein gehalten werden soll.

Im Bereich der Steuerdurchlässe 19 des ersten Kolbens 3 ist zur Verringerung des Drosselwiderstandes eine radiale, umlaufende Innennut 35 auf einer Innenseite des Kolbens 3 vorgesehen, welche die Länge der als radiale Querbohrungen vorgesehenen Steuerdurchlässe 19 verkürzt.

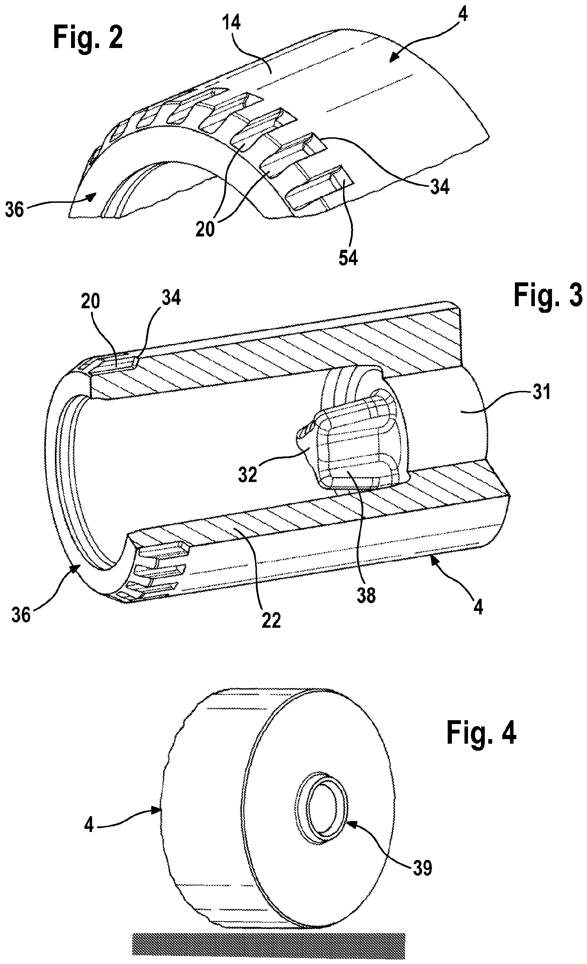

Fig. 2 bis 4 zeigen Teilansichten des zweiten Kolbens 4 in vergrößerter und räumlicher Darstellung teilweise geschnitten.

Um die Durchflussfläche der Steuerdurchlässe 20 des zweiten Kolbens 4 zu vergrößern, weisen die Steuerdurchlässe 20 eine parallel zu einer Kolbenstirnseite 36 ausgebildete Steuerkante 34 auf. Hierdurch ist es möglich, bei gleichem Schließweg den Durchflussquerschnitt der Steuerdurchlässe 20 zu vergrößern, so dass das Dynamikverhalten des Hauptzylinders 1 bei Regeleingriffen verbessert werden kann.

Wie ersichtlich ist, sind die Steuerdurchlässe 20 gemäß dem gezeigten Ausführungsbeispiel als axiale Nuten an der Außenseite 14 des Kolbens 4 ausgebildet. Diese können in einfacher Weise, beispielsweise durch Einformen oder Stanzen, in den Kolben 4 eingebracht werden, wenn der Kolben 4 aus Kunststoff ausgebildet ist, wodurch der Kolben 4 einfach und kostengünstig herstellbar ist. Die Stabilität des Kolbens 4 wird durch die axialen Nuten nicht beeinflusst, da der Kolben 4 ohne Nachteile hinsichtlich des Gewichtes und anderer notwendigen Eigenschaften eine stärkere Wandung 22 aufweisen kann.

Eine alternative Ausführungsform sieht vor, dass der Kolben 4 mittels eines Fliesspressverfahrens hergestellt ist. Als Werkstoff kann hierbei beispielsweise Aluminium vorgesehen sein. Auch hier können die parallelen Steuerkanten 34, aber auch die axialen Nuten in einfacher Weise vorgesehen werden.

Ein Nutende 54 der axialen Nuten kann, wie in Fig. 3 gezeigt, konisch ausgebildet sein, wobei eine Ausgestaltung mit einem Radius (konvex oder konkav) ebenso im Rahmen der Erfindung denkbar ist. Auch die Nutform ist unterschiedlich ausführbar. Diese können beispielsweise wie gezeigt im Wesentlichen schwalbenschwanzförmig in den Kolben 4 eingebracht werden. Die schwalbenschwanzförmige Nutform hat den Vorteil, dass die Kontaktfläche des Kolbens 4 zum Dichtelement 8 bzw. zu dessen Innendichtlippe 10 vergrößert wird und gleichzeitig durch einen vergrößerten Durchmesser der Nut am Nutgrund ein großer Durchflussquerschnitt dargestellt werden kann.

Jedoch sind auch rechteckige, gewellte, runde oder v-förmige Nuten möglich.

Die beschriebenen Steuerdurchlässe 20 haben den weiterhin den Vorteil, dass eine Manschettenferse 37 des Dichtelementes 8 definiert auf der Außenseite 14 des Kolbens 14 geführt ist und nicht in die Steuerdurchlässe 20 eintauchen kann. Eine derartige Gefahr würde beispielsweise bei einer umlaufenden Nut bestehen.

Wie Fig. 3 zu entnehmen ist, ist das erste Fixierelement 32 dreiarmig vorgesehen, wobei die einzelnen Arme 38 zur vereinfachten Montage und Positionierung der Rückstellfeder 24 abgeschrägt ausgebildet sind.

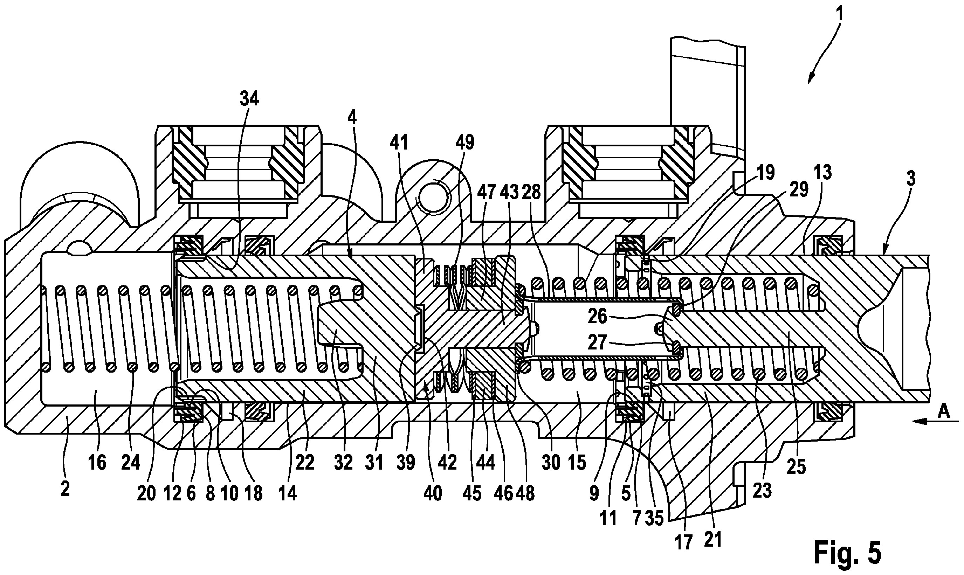

Fig. 4 zeigt eine Außenansicht des Bodens 31 des zweiten Kolbens 4. Es ist ersichtlich, dass sich von einer Außenseite des Bodens 31 ein zweites mittig angeordnetes Fixierelement 39 in Form eines kreisförmigen Vorsprunges erstreckt. Dieses erfüllt seine Funktion, wenn der Hauptzylinder 1 gemäß der nachfolgend beschriebenen und in Fig. 5 gezeigten zweiten Ausführungsform eine Sensoranordnung zur Überwachung von Position und Bewegung des Kolbens 3 aufweist und ein Magnetführungselement 40 an dem zweiten Kolben 4 anliegt.

Das in Fig. 5 dargestellte Magnetführungselement 40 liegt mit einem flanschförmigen Abschnitt 41 an dem Boden 31 des zweiten Kolbens 4 an. Dabei ist in dem flanschförmigen Abschnitt 41 eine dem zweiten Fixierelement 39 entsprechende Ausnehmung 42 vorgesehen, mittels welcher das Magnetführungselement 40 an dem zweiten Kolben 4 fixiert und positioniert wird.

Das Magnetführungselement 40 verfügt zusätzlich über einen, dem Zapfen 25 des ersten Kolbens 3 entgegen gerichteten zapfenförmigen Abschnitt 43, welcher als Mittel zur Führung eines Permanent-Magneten 44 dient.

Der Magnet 44 dient als Signalgeber für einen Stellungsgeber und sendet ein Magnetfeld radial in Richtung eines nicht gezeigten Sensorelementes - vorzugsweise in Gestalt eines Hall-Sensors, eines magnetoresistiven Sensors oder eines Reed-Kontaktes - aus, das ortsfest am Gehäuse 2 vorgesehen ist, und mit einer nicht gezeichneten elektronischen Steuereinheit verbindbar ist, um eine Lageerfassung zu ermöglichen.

Der Magnet 44 ist ringförmig und wie ersichtlich zwischen Scheiben 45,46 aus magnetischem Werkstoff auf einem zylindrischen Träger 47 aus nichtmagnetischem Werkstoff angeordnet, welcher über einen Bund 48 zur axialen Anlage des Magneten 44 verfügt.

Wie aus Fig. 5 hervorgeht, ist der Träger 47 mit dem Magneten 44 einerseits von der Rückstellfeder 23 des ersten Kolbens 3 und andererseits von einem weiteren Federmittel 49, welches an dem zweiten Kolben 4 abgestützt ist, beaufschlagt, so dass der Magnet 44 gewissermaßen zwischen den Kolben 3,4 sowie relativ zu diesen verschiebbar eingespannt ist. Die Federkraft der Rückstellfeder 23 ist jedoch größer als die Federkraft des weiteren Federmittels 49. Dadurch wird eine betätigungsbedingte Verschiebung des Magnets 44 ermöglicht, selbst wenn der zweite Kolben 4 infolge einer Fahrdynamikregelung unverschiebbar fest gelegt ist.

Die beschriebene Ausgestaltung des zweiten Kolbens 4 der beiden Ausführungsbeispiele bietet neben der Dynamikverbesserung die weiteren Vorteile, dass beispielsweise durch eine kürzere Rückstellfeder 24 die gesamte Baulänge des Hauptzylinders 1 verkürzt werden kann und der Hauptzylinder 1 insgesamt weniger Einzelteile aufweist. Ferner ist es im Rahmen der Erfindung auch möglich, den ersten Kolben 3 mit den beschriebenen Steuerdurchlässen 20 in Form von axialen Nuten und dem ersten Fixierelement 32 auszubilden.

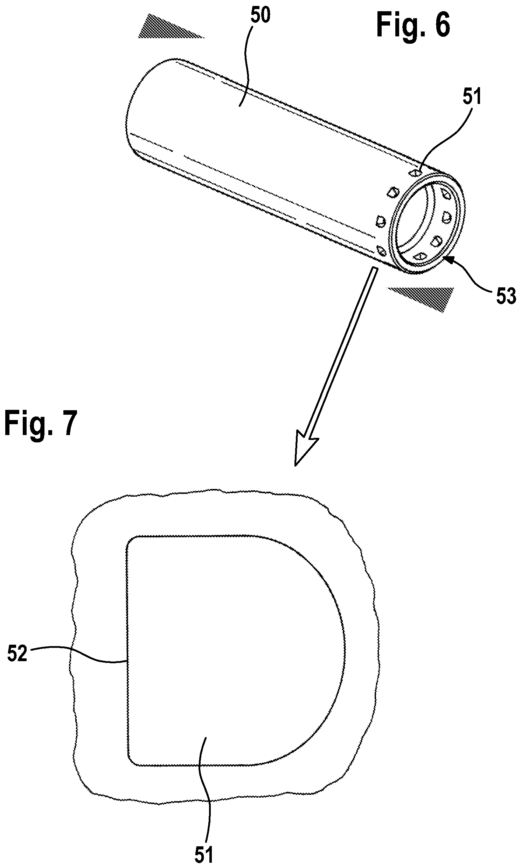

Den Fig. 6 und 7 ist ein Kolben 50 eines dritten Ausführungsbeispiels zu entnehmen, welcher als erster und/oder als zweiter Kolben des Hauptzylinders 1 vorgesehen werden kann. Wie insbesondere aus Fig. 7 hervorgeht, welche einen vergrößerten Ausschnitt des Kolbens 50 zeigt, weisen Steuerdurchlässe 51 des Kolbens 50 eine parallel zu einer Kolbenstirnseite 53 ausgebildete Steuerkante 52 auf. Im Unterschied zu den ersten beiden Ausführungsbeispielen sind die Steuerdurchlässe 51 als radiale Durchbrüche des Kolbens 50 vorgesehen, welcher, wie vorstehend beschrieben, aus Kunststoff oder mittels eines Fließpressverfahrens herstellt sein kann. Die parallele Steuerkante 52 weist auch hier den Vorteil auf, dass bei gleichem Schließweg der Durchflussquerschnitt der Steuerdurchlässe 52 vergrößert werden kann, so dass das Dynamikverhalten des Hauptzylinders 1 bei Regeleingriffen verbessert ist.
Die restliche Form der Steuerdurchlässe 51 kann an die entsprechenden Gegebenheiten des Kolbens angepasst werden.

Ein weiteres, nicht dargestelltes Ausführungsbeispiel sieht vor, dass die Steuerdurchlässe radial beginnen und sich als axial unter dem Dichtelement verlaufende Nut weiter erstrecken.

### Bezugszeichenliste

- 1: Hauptzylinder
- 2: Gehäuse
- 3: Kolben
- 4: Kolben
- 5: Ringnut
- 6: Ringnut
- 7: Dichtelement
- 8: Dichtelement
- 9: Innendichtlippe
- 10: Innendichtlippe
- 11: Außendichtlippe
- 12: Außendichtlippe
- 13: Außenseite
- 14: Außenseite
- 15: Druckraum
- 16: Druckraum
- 17: Nachlaufraum
- 18: Nachlaufraum
- 19: Steuerdurchlass
- 20: Steuerdurchlass
- 21: Wandung
- 22: Wandung
- 23: Rückstellfeder
- 24: Rückstellfeder
- 25: Zapfen
- 26: Ende
- 27: Anschlag
- 28: Hülse
- 29: Kragen
- 30: Kragen
- 31: Boden
- 32: Fixierelement
- 33: Steuerkante
- 34: Steuerkante
- 35: Innennut
- 36: Kolbenstirnseite
- 37: Manschettenferse
- 38: Arm
- 39: Fixierelement
- 40: Magnetführungselement
- 41: Flanschförmiger Abschnitt
- 42: Ausnehmung
- 43: Zapfenförmiger Abschnitt
- 44: Magnet
- 45: Scheibe
- 46: Scheibe
- 47: Träger
- 48: Bund
- 49: Federmittel
- 50: Kolben
- 51: Steuerdurchlass
- 52: Steuerkante
- 53: Kolbenstirnseite
- 54: Nutende

- A: Betätigungsrichtung

## Patentansprüche

1. Hauptzylinder (1) für ein geregeltes Bremssystem mit wenigstens einem, in einem Gehäuse (2) verschiebbaren Kolben (3,4,50) und der Kolben (4,50) aus Kunststoff ausgebildet ist, der mittels eines, in einer Ringnut (5,6) des Gehäuses (2) angeordneten Dichtelementes (7,8) gegenüber einem Druckraum (15,16) abgedichtet ist, welcher durch im Kolben (3,4,50) ausgebildete Steuerdurchlässe (19,20,51) mit einem drucklosen Nachlaufraum (17,18) verbindbar ist, **dadurch gekennzeichnet, dass** die Steuerdurchlässe (20,51) von wenigstens einem der Kolben (4,50) eine parallel zu einer Kolbenstirnseite (36,53) ausgebildete Steuerkante (34,52) aufweisen.

2. Hauptzylinder (1) nach Anspruch 1, **dadurch gekennzeichnet, dass** die Steuerdurchlässe (20) als axiale Nuten an einer Außenseite (14) des Kolbens (4) vorgesehen sind.

3. Hauptzylinder (1) nach Anspruch 3, **dadurch gekennzeichnet, dass** die axiale Nuten schwalbenschwanzförmig vorgesehen sind.

4. Hauptzylinder (1) nach Anspruch 1, **dadurch gekennzeichnet, dass** die Steuerdurchlässe (51) als radiale Durchbrüche des Kolbens (50) vorgesehen sind, wobei die Steuerdurchlässe (20,51) durch Stanzen in dem Kolben (4,50) vorgesehen sind.

5. Hauptzylinder (1) nach einem der vorangegangenen Ansprüche, **dadurch gekennzeichnet, dass** der Kolben (4,50) mittels eines Fliesspressverfahrens hergestellt ist.

6. Hauptzylinder (1) nach einem der vorangegangenen Ansprüche, **dadurch gekennzeichnet, dass** der Kolben (4) topfförmig mit einem Boden (31) ausgebildet ist und auf einer Innenseite des Bodens (31) ein erstes mittig angeordnetes Fixierelement (32) für eine Rückstellfeder (24) des Kolbens (4) vorgesehen ist.

7. Hauptzylinder (1) nach einem der vorangegangenen Ansprüche, **dadurch gekennzeichnet, dass** auf einer Außenseite des Bodens (31) ein zweites mittig angeordnetes Fixierelement (39) für ein Magnetführungselement (40) vorgesehen ist.

## Claims

1. Master cylinder (1) for a regulated braking system having at least one piston (3, 4, 50), which is movable in a housing (2), the piston (4, 50) being made of plastic, and which is sealed off by means of a sealing element (7, 8) arranged in an annular groove (5, 6) of the housing (2) from a pressure chamber (15, 16), which can be connected to an unpressurized replenishment chamber (17, 18) by means of control passages (19, 20, 51) formed in the piston (3, 4, 50), **characterized in that** the control passages (20, 51) of at least one of the pistons (4, 50) have a control edge (34, 52) formed parallel to a piston end face (36, 53).

2. Master cylinder (1) according to Claim 1, **characterized in that** the control passages (20) are provided as axial grooves on an outer side (14) of the piston (4).

3. Master cylinder (1) according to Claim 2, **characterized in that** the axial grooves are provided in a dovetail shape.

4. Master cylinder (1) according to Claim 1, **characterized in that** the control passages (51) are provided as radial apertures in the piston (50), wherein the control passages (20, 51) are provided in the piston (4, 50) by stamping.

5. Master cylinder (1) according to one of the preceding claims, **characterized in that** the piston (4, 50) is produced by means of an extrusion process.

6. Master cylinder (1) according to one of the preceding claims, **characterized in that** the piston (4) is of cup-shaped design with a bottom (31), and **in that** a first, centrally arranged fixing element (32) for a return spring (24) of the piston (4) is provided on an inner side of the bottom (31).

7. Master cylinder (1) according to one of the preceding claims, **characterized in that** a second, centrally arranged fixing element (39) for a magnetic guide element (40) is provided on an outer side of the bottom (31).

## Revendications

1. Maître-cylindre (1) pour un système de freinage régulé, comprenant au moins un piston (3, 4, 50) pouvant être déplacé dans un boîtier (2), le piston (4, 50) étant réalisé en plastique et étant étanchéifié, au moyen d'un élément d'étanchéité (7, 8) disposé dans une rainure annulaire (5, 6) du boîtier (2), par rapport à un espace de pression (15, 16) qui peut être raccordé, par des passages de commande (19, 20, 51) réalisés dans le piston (3, 4, 50), à un espace d'alimentation sans pression (17, 18), **caractérisé en ce que** les passages de commande (20, 51) d'au moins l'un des pistons (4, 50) présentent une arête de commande (34, 52) réalisée parallèlement à un côté frontal du piston (36, 53).

2. Maître-cylindre (1) selon la revendication 1, **caractérisé en ce que** les passages de commande (20) sont prévus sous forme de rainures axiales au niveau d'un côté extérieur (14) du piston (4).

3. Maître-cylindre (1) selon la revendication 2, **caractérisé en ce que** les rainures axiales sont prévues en forme de queue d'aronde.

4. Maître-cylindre (1) selon la revendication 1, **caractérisé en ce que** les passages de commande (51) sont prévus sous forme d'orifices radiaux du piston (50), les passages de commande (20, 51) étant prévus par estampage dans le piston (4, 50).

5. Maître-cylindre (1) selon l'une quelconque des revendications précédentes, **caractérisé en ce que** le piston (4, 50) est fabriqué au moyen d'un procédé d'extrusion.

6. Maître-cylindre (1) selon l'une quelconque des revendications précédentes, **caractérisé en ce que** le piston (4) est réalisé en forme de pot avec un fond (31) et un premier élément de fixation disposé centralement (32) pour un ressort de rappel (24) du piston (4) est prévu sur un côté intérieur du fond (31).

7. Maître-cylindre (1) selon l'une quelconque des revendications précédentes, **caractérisé en ce qu'**un deuxième élément de fixation disposé centralement (39) pour un élément de guidage magnétique (40) est prévu sur un côté extérieur du fond (31).
